# EUROPEAN PATENT APPLICATION

(11) **EP 4 617 841 A1**
(43) Date of publication of application: **17.09.2025**
(21) Application number: 23904042.1
(22) Date of filing: 14.12.2023
(51) Int. Cl.: G06F 3/04842, G06F 3/0481, G06F 3/01, G06T 19/00, G06F 3/00, H04W 4/80, G06F 1/16

(54) **ELECTRONIC DEVICE, METHOD, AND COMPUTER-READABLE STORAGE MEDIUM FOR DISPLAYING VISUAL OBJECT REPRESENTING APPLICATION BY USING AREA FORMED ON BASIS OF USER'S PHYSICAL INFORMATION**

(30) Priority: 16.12.2022 KR 20220177086; 26.12.2022 KR 20220184775
(71) Applicant: Samsung Electronics Co., Ltd., Suwon-si, Gyeonggi-do 16677 (KR)
(72) Inventor: JUNG, Soojin, Suwon-si, Gyeonggi-do 16677 (KR); PARK, Woonghee, Suwon-si, Gyeonggi-do 16677 (KR)
(74) Representative: Appleyard Lees IP LLP
(86) International application number: PCT/KR2023/020704
(87) International publication number: WO 2024/128843

(57) **Abstract**

This wearable device may comprise a display, a camera, a memory for storing instructions, and a processor. The instructions, when executed by the processor, may cause the wearable device to determine a user area on the basis of physical information of a user wearing the wearable device. The instructions, when executed by the processor, may cause the wearable device to identify an external object on the basis of an image acquired by using the camera. The instructions, when executed by the processor, may cause the wearable device to output a **UI** for inquiring whether or not to designate at least a part of the area in which the determined user area and the surface of the identified external object overlap as an interaction area. The instructions, when executed by the processor, may cause the wearable device to display a visual object representing an identified software application on the basis of information regarding the history of use of the software application in the interaction area through the display on the basis of a user input regarding the **UI** for confirming designation of the interaction area.

## Description

### [Technical Field]

The present disclosure relates to an electronic device, a method, and a computer-readable storage medium for displaying a visual object representing an application by using an area formed based on body information of a user.

### [Background Art]

In order to provide an enhanced user experience, an electronic device that provides an augmented reality (AR) service displaying information generated by a computer in conjunction with an external object in the real-world is being developed. The electronic device may be a wearable device that may be worn by a user. For example, the electronic device may be AR glasses and/or a head-mounted device (HMD).

### [Disclosure]

### [Technical Solution]

In a wearable device according to an embodiment, the wearable device may comprise a display, a camera, memory storing instructions, and a processor. The instructions, when executed by the processor, may cause the wearable device to determine a user area based on body information of a user wearing the wearable device. The instructions, when executed by the processor, may cause the wearable device to identify an external object, based on an image obtained using the camera. The instructions, when executed by the processor, may cause the wearable device to output a user interface (UI) querying whether to designate at least a portion of an area where the determined user area and a surface of the identified external object overlap as an interaction area. The instructions, when executed by the processor, may cause the wearable device to, based on a user input to the UI, display, on the interaction area through the display, a visual object indicating a software application identified based on usage history information of the software application.

In a method executed by a wearable device according to an embodiment, the method may comprise determining a user area based on body information of a user wearing the wearable device. The method may comprise identifying an external object, based on an image obtained using a camera. The method may comprise obtaining at least a portion of an area where the determined user area and a surface of the identified external object overlap as an interaction area. The method may comprise, based on a user input to the UI, displaying, on the interaction area through a display, a visual object indicating a software application identified based on usage history information of the software application.

In a computer readable storage medium, storing one or more programs, the one or more programs, when executed by a processor of a wearable device, may cause the wearable device to determine a user area based on body information of a user wearing the wearable device. The one or more programs, when executed by the processor, may cause the wearable device to identify an external object, based on an image obtained using the camera. The one or more programs, when executed by the processor, may cause the wearable device to output a user interface (UI) querying whether to designate at least a portion of an area where the determined user area and a surface of the identified external object overlap as an interaction area. The one or more programs, when executed by the processor, may cause the wearable device to, based on a user input to the UI identifying the designation of the interaction area, display, on the interaction area through the display, a visual object indicating a software application identified based on a usage history information of the software application.

### [Description of the Drawings]

FIG. 1 illustrates an exemplary state in which a wearable device according to an embodiment displays a visual object corresponding to an external object.
FIG. 2A illustrates an example of a perspective view of a wearable device according to an embodiment.
FIG. 2B illustrates an example of one or more hardware disposed in a wearable device according to an embodiment.
FIGS. 3A to 3B illustrate an example of an exterior of a wearable device according to an embodiment.
FIG. 4 illustrates an example of a block diagram of a wearable device according to an embodiment.
FIG. 5 illustrates an example of an operation in which a wearable device according to an embodiment obtains body information of a user.
FIG. 6 illustrates an example of an operation in which a wearable device according to an embodiment sets an interaction area for displaying a visual object indicating a software application.
FIG. 7 illustrates an example of an operation in which a wearable device according to an embodiment changes an interaction area.
FIG. 8 illustrates an example of an operation in which a wearable device according to an embodiment displays a visual object on an interaction area.
FIG. 9 illustrates an example of an operation in which a wearable device according to an embodiment changes a visual object based on a size of an interaction area.
FIG. 10 illustrates an example of an operation in which a wearable device according to an embodiment sets an interaction area in response to a user input.
FIG. 11 illustrates an example of a flowchart indicating an operation of a wearable device according to an embodiment.
FIG. 12 illustrates an example of a flowchart indicating an operation in which a wearable device according to an embodiment obtains body information of a user using an external electronic device.
FIG. 13 illustrates an example of a flowchart indicating an operation a wearable device according to an embodiment obtains usage history information of a software application.
FIG. 14 is an exemplary diagram of a network environment in which a metaverse service is provided through a server.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

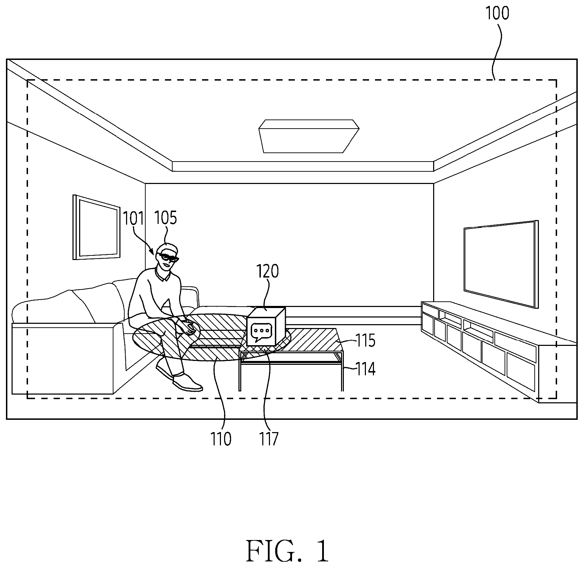

FIG. 1 illustrates an exemplary state in which a wearable device according to an embodiment displays a visual object corresponding to an external object. A wearable device 101 of FIG. 1 may include a head-mounted display (HMD) wearable on a head of a user 105. The wearable device 101 according to an embodiment may include a camera disposed toward a front of the user 105 in a state of being worn by the user 105. The front of the user 105 may include a direction in which the head of the user 105 and/or two eyes included in the head face. The wearable device 101 according to an embodiment may include a sensor for identifying the head of the user 105 and/or motion of the wearable device 101 in a state being worn by the user 105. The wearable device 101 may identify an angle of the wearable device 101 based on data of the sensor. In order to provide a user interface (UI) based on virtual reality (VR), augmented reality (AR), and/or mixed reality (MR) to the user 105 wearing the wearable device 101, the wearable device 101 may control the camera and/or the sensor. The UI may be related to the wearable device 101 and/or a metaverse service and/or a notification service provided by a server connected to the wearable device 101.

According to an embodiment, the wearable device 101 may execute a function related to the augmented reality (AR) and/or the mixed reality (MR). Referring to FIG. 1, in a state in which the user 105 is wearing the wearable device 101, the wearable device 101 may include at least one lens disposed adjacent to the eyes of the user 105. The wearable device 101 may combine ambient light passing through the lens with light emitted from a display of the wearable device 101. A display area of the display may be formed in the lens through which the ambient light passes. Since the wearable device 101 combines the ambient light and the light emitted from the display, the user 105 may see an image in which a real object (e.g., an external object 114) recognized by the ambient light and a virtual object (e.g., a visual object 120) formed by the light emitted from the display are mixed.

According to an embodiment, the wearable device 101 may execute a function related to a video see-through (VST) and/or the virtual reality (VR). In a state in which the user 105 is wearing the wearable device 101, the wearable device 101 may include a housing covering the eyes of the user 105. In the state, the wearable device 101 may include a display disposed on a first surface facing the eye. The wearable device 101 may include a camera disposed on a second surface opposite to the first surface. Using the camera, the wearable device 101 may obtain frames including the ambient light. The wearable device 101 may output the frames to the display disposed on the first surface such that the user 105 recognizes the ambient light through the display. A display area of the display disposed on the first surface may be formed by one or more pixels included in the display. The wearable device 101 may enable the user 105 to recognize the virtual object together with the real object recognized by the ambient light by combining the virtual object in the frames outputted through the display.

The wearable device 101 according to an embodiment may provide a user experience based on the mixed reality (MR) by using a virtual space. The wearable device 101 may generate the virtual space mapped to an external space by recognizing the external space in which the wearable device 101 is included. The wearable device 101 recognizing the external space may include an operation of obtaining information on a size of the external space (e.g., the size of the external space distinguished by a side wall, a floor surface, and/or a ceiling surface). The wearable device 101 recognizing the external space may include an operation of identifying a plane (e.g., a ceiling, and/or a floor) included in the external space. The plane may be an example of a plane parallel to a reference surface (e.g., a horizontal surface). An operation in which the wearable device 101 identifies the external space may include an operation of identifying the external object 114 located in the external space. The operation in which the wearable device 101 identifies the external space may include an operation of identifying a surface of the external object. The operation in which the wearable device 101 identifies the external space may include an operation of identifying a size (e.g., a width, a height, an altitude, and/or a length) of the surface. The operation in which the wearable device 101 identifies the external space may include an operation of identifying a virtual object (e.g., a user interface (UI) for displaying at least one image, or the visual object 120) displayed in the display.

Referring to FIG. 1, a state in which the wearable device 101 according to an embodiment provides a function related to the augmented reality is illustrated. For example, the state may include at least a portion of a reality space 100 where the wearable device 101 is located. In a state of displaying an image (e.g., an image indicating a real space) of the camera, the wearable device 101 may overlap and display the visual object 120 linked to the external object 114 included in the image with the image.

The wearable device 101 according to an embodiment may provide the user 105 with the external object (or the real object) 114 recognized by the ambient light and the visual object (or the virtual object) 120 displayed by the display. The wearable device 101 may display, on the display, the visual object 120 corresponding to a software application on the display based on the software application. For example, the visual object 120 may include an icon and/or widget content for the software application.

The wearable device 101 according to an embodiment may identify the space 100 using the image obtained by using the camera. The wearable device 101 may identify a surface 115 of the external object 114 in the space 100 by using the camera. Based on identifying the surface 115, the wearable device 101 may identify a portion of the surface 115 as an interaction area 117 by using body information the user stored in memory. The interaction area 117 may be an example of an overlapping area where a user area 110 obtained by the wearable device 101 based on the body information of the user and the portion of the surface 115 overlap. The wearable device 101 may display the visual object 120 on the interaction area 117 using the display. The visual object 120 may be a virtual object corresponding to the software application. The wearable device 101 may identify the software application corresponding to the visual object 120 based on usage history information of the software application in at least a portion of the space 100. The usage history information of the software application may be obtained (or generated) based on a usage frequency and/or a usage time of the software application executed by the wearable device 101 in the at least a portion of the space 100. The wearable device 101 may adjust the number of visual objects to be displayed on the interaction area 117 based on a size of the interaction area 117. The wearable device 101 may change a shape of the visual object 120 based on the size of the interaction area 117. For example, the shape of the visual object 120 may include an icon, a widget, and/or a picture in picture (PIP) screen corresponding to the software application. The visual object 120 may include media content displayed based on the software application.

As described above, the wearable device 101 according to an embodiment may identify the space 100 where the wearable device 101 is located based on entering the space 100 using communication circuitry. The wearable device 101 may identify the usage history information of the software application for the at least a portion of the space 100 based on identifying the space 100. The wearable device 101 may identify the external object 114 located in the space 100 based on the image obtained by using the camera. The wearable device 101 may identify the surface 115 of the external object 114 by using the camera. Based on identifying the surface 115, the wearable device 101 may identify a portion of the surface 115 where the user area 110 and the surface 115 overlap as the interaction area 117. The wearable device 101 may display the visual object 120 based on the software application usage history information, by controlling the display, on the interaction area 117. The wearable device 101 may provide the user 105 with an augmented reality service based on the image overlapping the real object and the virtual object, by displaying the visual object 120 corresponding to the software application for the at least a portion of the space 100.

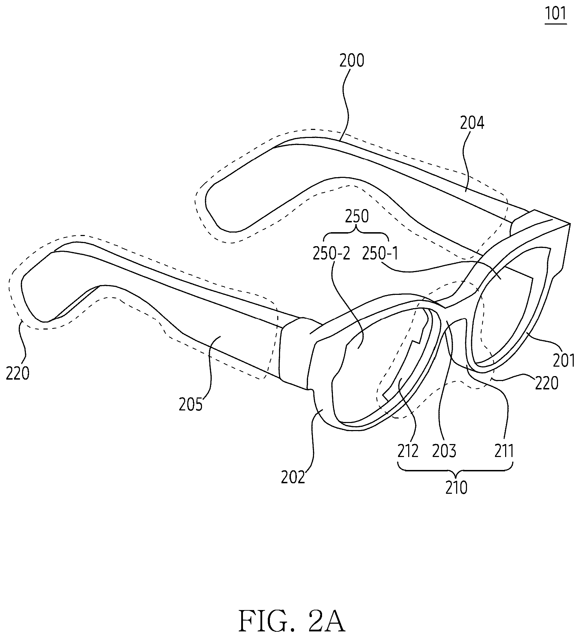

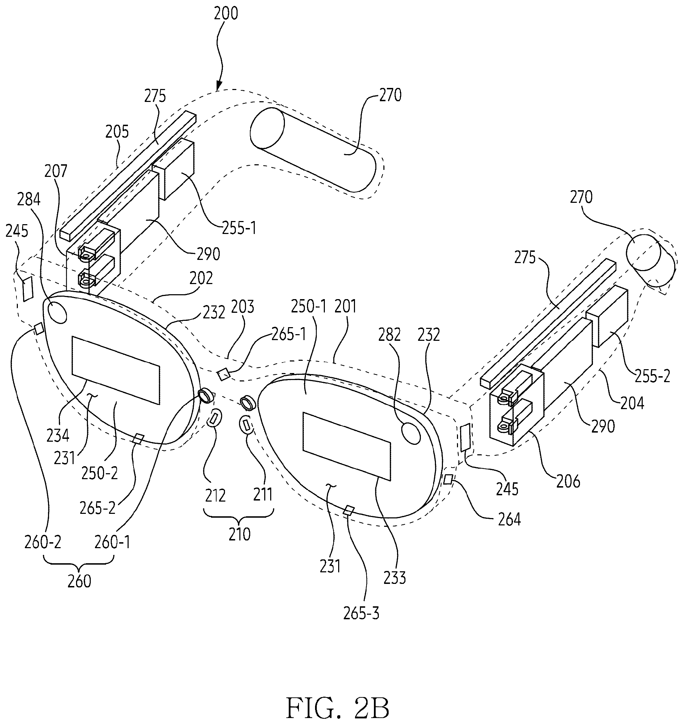

FIG. 2A illustrates an example of a perspective view of a wearable device according to an embodiment. FIG. 2B illustrates an example of one or more hardware disposed in a wearable device according to an embodiment. According to an embodiment, the wearable device 101 may have a shape of glasses wearable on a body part (e.g., head) of a user. The wearable device 101 of FIGS. 2A and 2B may be an example of the wearable device 101 of FIG. 1. The wearable device 101 may include a head-mounted display (HMD). For example, a housing of the wearable device 101 may include a flexible material, such as rubber and/or silicone, having a shape that is in close contact with a part of the user's head (e.g., a part of the face surrounding both eyes). For example, the housing of the wearable device 101 may include one or more straps able to be twined around the user's head and/or one or more temples attachable to the head's ear.

Referring to FIG. 2A, according to an embodiment, the wearable device 101 may include at least one display 250 and a frame 200 supporting the at least one display 250.

According to an embodiment, the wearable device 101 may be wearable on a portion of the user's body. The wearable device 101 may provide augmented reality (AR), virtual reality (VR), or mixed reality (MR) combining the augmented reality and the virtual reality to a user wearing the wearable device 101. For example, the wearable device 101 may display a virtual reality image provided from at least one optical device 282 and 284 of FIG. 2B on at least one display 250, in response to a user's preset gesture obtained through a motion recognition camera 260-2 and 264 of FIG. 2B.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, in an embodiment, the at least one display 250 may provide visual information transmitted through a lens included in the at least one display 250 from ambient light to a user and other visual information distinguished from the visual information2. The lens may be formed based on at least one of a Fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 101, ambient light may be transmitted to the user by being incident on the first surface 231 and being penetrated through the second surface 232. For another example, the at least one display 250 may display an augmented reality image in which a virtual reality image provided by the at least one optical device 282 and 284 is combined with a reality screen transmitted through ambient light, on a display area formed on the second surface 232.

According to an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 101 to guide a screen displayed by the at least one display 250 to the user's eyes. For example, the screen may be transmitted to the user's eyes based on total internal reflection (TIR) generated in the at least one waveguide 233 and 234.

According to an embodiment, the wearable device 101 may analyze an object included in a real image collected through a photographing camera 245, combine with a virtual object corresponding to an object that become a subject of augmented reality provision among the analyzed object, and display on the at least one display 250. The virtual object may include at least one of text and images for various information associated with the object included in the real image. The wearable device 101 may analyze the object based on a multi-camera such as a stereo camera. For the object analysis, the wearable device 101 may execute simultaneous localization and mapping (SLAM) and/or time-of-flight (ToF), supported by the multi-camera. The user wearing the wearable device 101 may watch an image displayed on the at least one display 250.

According to an embodiment, a frame 200 may be configured with a physical structure in which the wearable device 101 may be worn on the user's body. According to an embodiment, the frame 200 may be configured so that when the user wears the wearable device 101, the first display 250-1 and the second display 250-2 may be positioned corresponding to the user's left and right eyes. The frame 200 may support the at least one display 250. For example, the frame 200 may support the first display 250-1 and the second display 250-2 to be positioned at positions corresponding to the user's left and right eyes.

Referring to FIG. 2A, according to an embodiment, the frame 200 may include an area 220 at least partially in contact with the portion of the user's body in case that the user wears the wearable device 101. For example, the area 220 of the frame 200 in contact with the portion of the user's body may include an area in contact with a portion of the user's nose, a portion of the user's ear, and a portion of the side of the user's face that the wearable device 101 contacts. According to an embodiment, the frame 200 may include a nose pad 210 that is contacted on the portion of the user's body. When the wearable device 101 is worn by the user, the nose pad 210 may be contacted on the portion of the user's nose. The frame 200 may include a first temple 204 and a second temple 205, which are contacted on another portion of the user's body that is distinct from the portion of the user's body.

For example, the frame 200 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 101 may identify an external object (e.g., a user's fingertip) touching the frame 200 and/or a gesture performed by the external object by using a touch sensor, a grip sensor, and/or a proximity sensor formed on at least a portion of the surface of the frame 200.

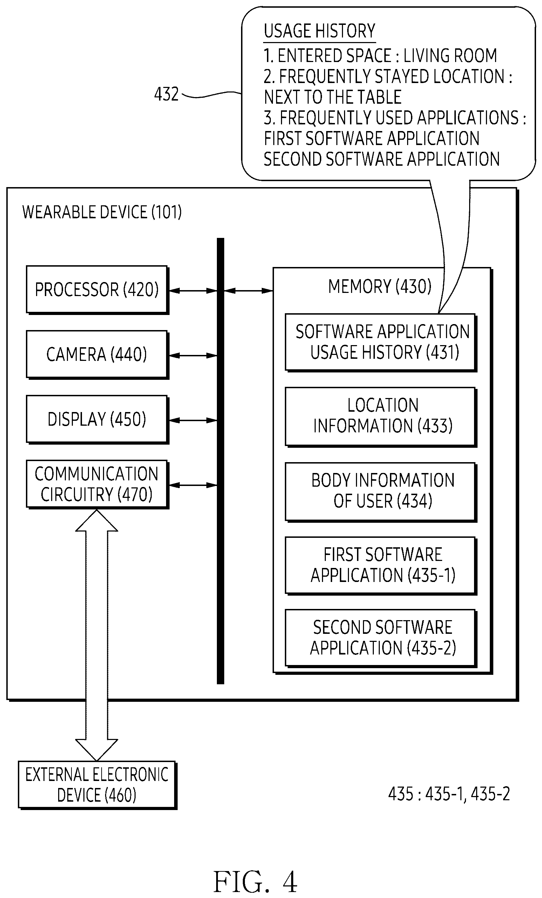

According to an embodiment, the wearable device 101 may include hardware (e.g., hardware to be described later based on the block diagram of FIG. 4) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290 (e.g., printed circuit board). Various hardware may be disposed in the frame 200.

According to an embodiment, the microphone (e.g., the microphones 265-1, 265-2, and 265-3) of the wearable device 101 may obtain a sound signal, by being disposed on at least a portion of the frame 200. The first microphone 265-1 disposed on the nose pad 210, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 101 is two or more, the wearable device 101 may identify a direction of the sound signal by using a plurality of microphones disposed on different portions of the frame 200.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 101 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 245, an eye tracking camera (ET CAM) 260-1, and/or the motion recognition camera 260-2. The photographing camera 245, the eye tracking camera 260-1, and the motion recognition camera 260-2 may be disposed at different positions on the frame 200 and may perform different functions. The eye tracking camera 260-1 may output data indicating a gaze of the user wearing the wearable device 101. For example, the wearable device 101 may detect the gaze from an image including the user's pupil obtained through the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 245 may photograph a real image or background to be matched with a virtual image in order to implement the augmented reality or mixed reality content. The photographing camera 245 may photograph an image of a specific object existing at a position viewed by the user and may provide the image to the at least one display 250. The at least one display 250 may display one image in which a virtual image provided through the at least one optical device 282 or 284 is overlapped with information on the real image or background including the image of the specific object obtained by using the photographing camera 245. In an embodiment, the photographing camera 245 may be disposed on the bridge 203 disposed between the first rim 201 and the second rim 202.

According to an embodiment, the eye tracking camera 260-1 may implement a more realistic augmented reality by matching the user's gaze with the visual information provided on the at least one display 250, by tracking the gaze of the user wearing the wearable device 101. For example, when the user looks at the front, the wearable device 101 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 101 is positioned.

The motion recognition camera 260-2 may provide a specific event to the screen provided on the at least one display 250 by recognizing the movement of the whole or portion of the user's body, such as the user's torso, hand, or face. The motion recognition camera 260-2 may obtain a signal corresponding to motion by recognizing the user's gesture, and may provide a display corresponding to the signal to the at least one display 250. A processor may identify a signal corresponding to the operation and may perform a preset function based on the identification. In an embodiment, the motion recognition camera 260-2 may be disposed on the first rim 201 and/or the second rim 202.

According to an embodiment, the camera 260 included in the wearable device 101 is not limited to the above-described eye tracking camera 260-1 and the motion recognition camera 260-2. For example, the wearable device 101 may identify an external object included in the FoV by using a camera 260 disposed toward the user's FoV. The wearable device 101 identifying the external object may be performed based on a sensor for identifying a distance between the wearable device 101 and the external object, such as a depth sensor and/or a time of flight (ToF) sensor. The camera 260 disposed toward the FoV may support an autofocus function and/or an optical image stabilization (OIS) function. For example, in order to obtain an image including a face of the user wearing the wearable device 101, the wearable device 101 may include the camera 260 (e.g., a face tracking (FT) camera) disposed toward the face.

Although not illustrated, the wearable device 101 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 200, and the hinge units 206 and 207.

According to an embodiment, the battery module 270 may supply power to electronic components of the wearable device 101. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

According to an embodiment, the antenna module 275 may transmit the signal or power to the outside of the wearable device 101 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

According to an embodiment, the speaker 255 may output a sound signal to the outside of the wearable device 101. A sound output module may be referred to as a speaker. In an embodiment, the speaker 255 may be disposed in the first temple 204 and/or the second temple 205 in order to be disposed adjacent to the ear of the user wearing the wearable device 101. For example, the speaker 255 may include a second speaker 255-2 disposed adjacent to the user's left ear by being disposed in the first temple 204, and a first speaker 255-1 disposed adjacent to the user's right ear by being disposed in the second temple 205.

According to an embodiment, the light emitting module (not illustrated) may include at least one light emitting element. The light emitting module may emit light of a color corresponding to a specific state or may emit light through an operation corresponding to the specific state in order to visually provide information on a specific state of the wearable device 101 to the user. For example, when the wearable device 101 requires charging, it may repeatedly emit red light at a specific timing. In an embodiment, the light emitting module may be disposed on the first rim 201 and/or the second rim 202.

Referring to FIG. 2B, according to an embodiment, the wearable device 101 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by blocks of FIG. 4) included in the wearable device 101 may be disposed. The wearable device 101 may include a flexible PCB (FPCB) for interconnecting the hardware.

According to an embodiment, the wearable device 101 may include at least one of a gyro sensor, a gravity sensor, and/or an acceleration sensor for detecting the posture of the wearable device 101 and/or the posture of a body part (e.g., a head) of the user wearing the wearable device 101. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 101 may identify the user's motion and/or gesture performed to execute or stop a specific function of the wearable device 101 based on the IMU.

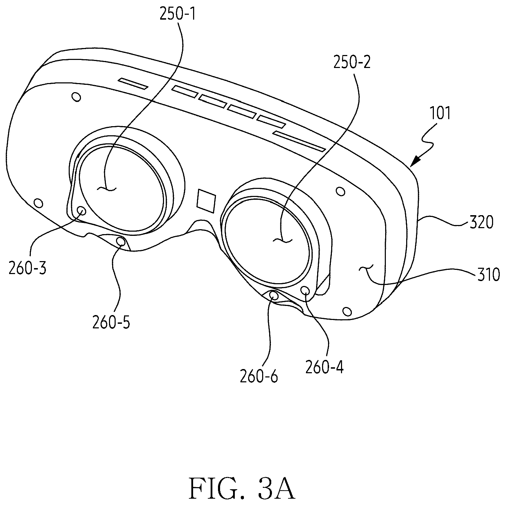

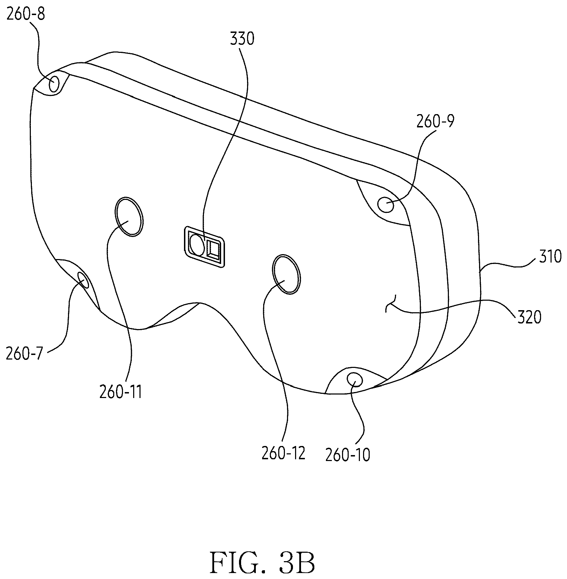

FIGS. 3A to 3B illustrate an example of an exterior of a wearable device according to an embodiment. The wearable device 101 of FIGS. 3A to 3B may be an example of the wearable device 101 of FIG. 1. According to an embodiment, an example of an exterior of a first surface 310 of a housing of the wearable device 101 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 101 may have an attachable shape on the user's body part (e.g., the user's face). Although not illustrated, the wearable device 101 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 101 may further include rubber or silicon packing, which are formed on the first surface 310, for preventing interference by light (e.g., ambient light) different from the light emitted from the first display 250-1 and the second display 250-2.

According to an embodiment, the wearable device 101 may include cameras 260-3 and 260-4 for photographing and/or tracking two eyes of the user adjacent to each of the first display 250-1 and the second display 250-2. The cameras 260-3 and 260-4 may be referred to as the ET camera. According to an embodiment, the wearable device 101 may include cameras 260-5 and 260-6 for photographing and/or recognizing the user's face. The cameras 260-5 and 260-6 may be referred to as a FT camera.

Referring to FIG. 3B, for example, a camera (e.g., cameras 260-7, 260-8, 260-9, 260-10, 260-11, and 260-12), and/or a sensor (e.g., the depth sensor 330) for obtaining information associated with the external environment of the wearable device 101 may be disposed on the second surface 320 opposite to the first surface 310 of FIG. 3A. For example, the cameras 260-7, 260-8, 260-9, and 260-10 may be disposed on the second surface 320 in order to recognize an external object (e.g., the external object 220) distinct from the wearable device 101. For example, by using cameras 260-11 and 260-12, the wearable device 101 may obtain an image and/or video to be transmitted to each of the user's two eyes. The camera 260-11 may be disposed on the second surface 320 of the wearable device 101 to obtain an image to be displayed through the second display 250-2 corresponding to the right eye among the two eyes. The camera 260-12 may be disposed on the second surface 320 of the wearable device 101 to obtain an image to be displayed through the first display 250-1 corresponding to the left eye among the two eyes.

According to an embodiment, the wearable device 101 may include the depth sensor 330 disposed on the second surface 320 in order to identify a distance between the wearable device 101 and the external object. By using the depth sensor 330, the wearable device 101 may obtain spatial information (e.g., a depth map) about at least a portion of the FoV of the user wearing the wearable device 101.

Although not illustrated, a microphone for obtaining sound outputted from the external object may be disposed on the second surface 320 of the wearable device 101. The number of microphones may be one or more according to embodiments.

As described above, the wearable device 101 according to an embodiment may have a form factor for being worn on a head of the user. The wearable device 101 may provide a user experience based on augmented reality, virtual reality, and/or mixed reality in a state being worn on the head. The wearable device 101 may display a visual object (e.g., the visual object 120 of FIG. 1) using a display within a user interface for providing the augmented reality, the virtual reality, and/or the mixed reality by using the depth sensor 330 for identifying location information of the external object. The wearable device 101 may reduce data throughput for rendering the visual object by selectively displaying the visual object on the display.

FIG. 4 illustrates an example of a block diagram of a wearable device according to an embodiment. A wearable device 101 of FIG. 4 may include the wearable device 101 of FIGS. 1 to 3B. The wearable device 101 may include at least one of a processor 420, memory 430, a camera 440, a display 450, or communication circuitry 470. The processor 420, the memory 430, the camera 440, the display 450 and the communication circuitry 470 may be electronically and/or operably coupled with each other by a communication bus. Hereinafter, hardware being operably coupled may mean that a direct or an indirect connection between the hardware is established by wire or wirelessly so that second hardware among the hardware is controlled by first hardware. Although illustrated based on different blocks, an embodiment is not limited thereto, and a portion (e.g., the processor 420, the memory 430, and the communication circuitry 470) of the hardware of FIG. 4 may be included in a single integrated circuit like a system on a chip (SoC). A type and/or the number of the hardware included in the wearable device 101 is not limited as illustrated in FIG. 4. For example, the wearable device 101 may include only a portion of hardware components illustrated in FIG. 4.

The processor 420 of the wearable device 101 according to an embodiment may include hardware for processing data based on one or more instructions. The hardware for processing data may include, for example, an arithmetic and logic unit (ALU), a floating point unit (FPU), a field programmable gate array (FPGA), a central processing unit (CPU), and/or an application processor (AP). The processor 420 may have a structure of a single-core processor, or may have a structure of a multi-core processor such as a dual core, a quad core, or a hexa core.

The memory 430 of the wearable device 101 according to an embodiment may include hardware for storing data and/or instructions inputted to and/or outputted from the processor 420 of the wearable device 101. The memory 430 may include, for example, volatile memory such as random-access memory (RAM) and/or non-volatile memory such as read-only memory (ROM). The volatile memory may include, for example, at least one of dynamic RAM (DRAM), static RAM (SRAM), cache RAM, and pseudo SRAM (PSRAM). The non-volatile memory may include, for example, at least one programmable ROM (PROM), erasable PROM (EPROM), electrically erasable PROM (EEPROM), flash memory, a hard disk, a compact disk, a solid state drive (SSD), and an embedded multi media card (eMMC).

The camera 440 of the wearable device 101 according to an embodiment may include one or more optical sensors (e.g., a charged coupled device (CCD) sensor and a complementary metal oxide semiconductor (CMOS) sensor) for generating an electrical signal indicating a color and/or brightness of light. A plurality of optical sensors included in the camera 440 may be disposed in a form of a 2 dimensional array. The camera 440 may generate a 2 dimensional frame corresponding to light reaching the optical sensors of a 2 dimensional grid, by obtaining electrical signals of each of the plurality of optical sensors substantially simultaneously. For example, photo data captured using the camera 440 may include one 2 dimensional obtained from the camera 440. For example, video data captured using the camera 440 may mean a sequence of a plurality of 2 dimensional frames obtained from the camera 440 according to a frame rate. The camera 440 is disposed toward a direction in which the camera 440 receives the light, and may further include a flash light for outputting the light toward the direction. Although the camera 440 is illustrated based on a single block, the number of the camera 440 included in the wearable device 101 is not limited to the embodiment. For example, the wearable device 101 may include one or more cameras, such as one or more cameras 260 of FIGS. 2A to 2B and/or 3A to 3B. For example, the wearable device 101 may identify a location of the wearable device 101 in a space (e.g., the space 100 of FIG. 1) based on performing simultaneous localization and mapping (SLAM) using the camera 440.

The display 450 of the wearable device 101 according to an embodiment may output visualized information to a user. For example, the display 450 may output the visualized information to the user by being controlled by the processor 420 and/or a graphic processing unit (GPU) (not illustrated). The display 450 may include a flat panel display (FPD) and/or electronic paper. The FPD may include a liquid crystal display (LCD), a plasma display panel (PDP), a digital mirror device (DMD), one or more light emitting diodes (LEDs), and/or a micro LED. The LED may include an organic LED (OLED). In an embodiment, transmission of light may occur in at least a portion of the display 450. The wearable device 101 may provide a user experience related to augmented reality by providing the user with a combination of light outputted through the display 450 and light transmitted through the display 450. As described above with reference to FIGS. 2A to 2B and/or 3A to 3B, the display 450 of the wearable device 101 according to an embodiment may have a structure for covering an entire field-of-view (FoV) of the user or emitting light toward the FoV in a state of being worn on a body part of the user such as a head. Although not illustrated, the wearable device 101 may include other output means for outputting information in a form other than a visual form and an audible form. For example, the wearable device 101 may include at least one speaker for outputting an audio signal, and/or a motor (or an actuator) for providing haptic feedback based on vibration.

The communication circuitry 470 of the wearable device 101 according to an embodiment may include hardware for supporting transmission and/or reception of an electrical signal between the wearable device 101 and an external electronic device 460. Only the external electronic device 460 is illustrated as another electronic device connected through the communication circuitry 470 of the wearable device 101, but the embodiment is not limited thereto. The communication circuitry 470 may include, for example, at least one of a MODEM, an antenna, and an optic/electronic (O/E) converter. The communication circuitry 470 may support the transmission and/or the reception of the electrical signal based on various types of protocols such as Ethernet, a local area network (LAN), a wide area network (WAN), wireless fidelity (WiFi), Bluetooth, Bluetooth low energy (BLE), ZigBee, long term evolution (LTE), and a 5G new radio (NR). For example, the wearable device 101 may identify a location of the wearable device 101 in a real space (e.g., the space 100 of FIG. 1) based on an ultra-wide band (UWB) using the communication circuitry 470. For example, the wearable device 101 may identify the location of the wearable device 101 based on identifying at least one sensor (not illustrated) disposed in a space (e.g., the space 100 of FIG. 1) using the communication circuitry 470. The at least one sensor may be disposed in at least a portion of the space. However, it is not limited thereto. As an example, the wearable device 101 may identify the location of the wearable device 101 based on a time-of-flight (ToF) and/or a global positioning system (GPS).

For example, the wearable device 101 may obtain (or generate) usage history information (e.g., a software application usage history information 431) regarding the software application that the wearable device 101 executed in the location, based on identifying the location. The wearable device 101 may store location information 433 indicating the location in the memory 430 based on obtaining (or generating) the usage history information.

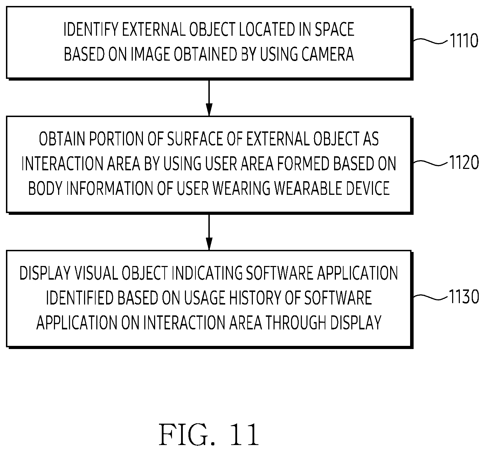

In the memory 430 of the wearable device 101 according to an embodiment, one or more instructions (or commands) indicating an operation and/or operation to be performed by the processor 420 of the wearable device 101 on data may be stored. A set of the one or more instructions may be referred to as firmware, an operating system, a process, a routine, a sub-routine and/or a software application. For example, the wearable device 101 and/or the processor 420 may perform at least one of the operations of FIGS. 11 to 13 when a set of a plurality of instructions distributed in a form of the operating system, the firmware, a driver, and/or the software application is executed. Hereinafter, a software application being installed in the wearable device 101 may mean that one or more instructions provided in a form of the software application are stored in the memory 430, and the one or more applications are stored in an executable format (e.g., a file with an extension designated by the operating system of the wearable device 101). As an example, the software application may include a program and/or a library related to a service provided to the user. For example, the wearable device 101 may store the one or more software applications 435 in the memory 430.

The wearable device 101 according to an embodiment may execute at least one of the one or more software applications 435 in a state of being located in at least a portion of the space (e.g., the space 100 of FIG. 1). In the state, the wearable device 101 may obtain (or generate) the software application usage history information 431 based on a frequency of use, hours of use, and/or a reaction velocity of the user (e.g., the user 105 of FIG. 1) who executed at least one of the one or more software applications 435. The reaction velocity may be obtained based on the user receiving an input for initiating execution of the at least one to check a notification message in response to the notification message generated by the at least one. For example, the reaction velocity may be obtained based on time information from a time point when the notification message occurs to a time point when the input is received. However, it is not limited thereto.

The wearable device 101 according to an embodiment may set a priority based on the frequency of use, the hours of use, and/or the reaction velocity of the user (e.g., the user 105 of FIG. 1) for the at least one of the one or more software applications 435. For example, a priority for each of the software applications 435 may be set by using a first parameter (e.g., 0.25) for the frequency of use, a second parameter (e.g., 0.2) for the time of use, and/or a third parameter (e.g., 0.05) for the reaction velocity. The wearable device 101 may obtain (or generate) the software application usage history information 431 including information on each of the software applications 435 based on setting the priority. For example, the wearable device 101 may obtain (or generate) the software application usage history information 431 using the location information 433 for the at least a portion of the space (e.g., the space 100 of FIG. 1).

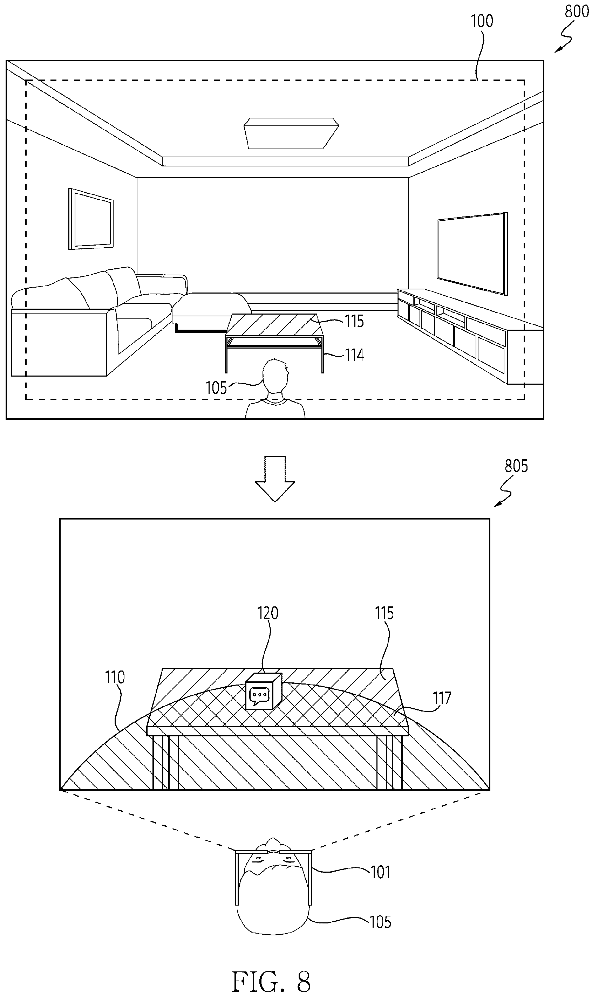

For example, the software application usage history information 431 may be indicated, such as text information 432. The software application usage history information 431 may include information (e.g., "entered space: living room") on the space based on the location information 433. The software application usage history information 431 may include information (e.g., "frequently stayed location: next to the table") on the at least a portion of the space based on the location information 433. The software application usage history information 431 may include software application information (e.g., "Frequently used applications: a first software application 435-1 and a second software application 435-2") based on the priority. An operation in which the wearable device 101 displays a visual object on the interaction area 117 of FIG. 1 based on the software application usage history information 431 will be described later in FIG. 8.

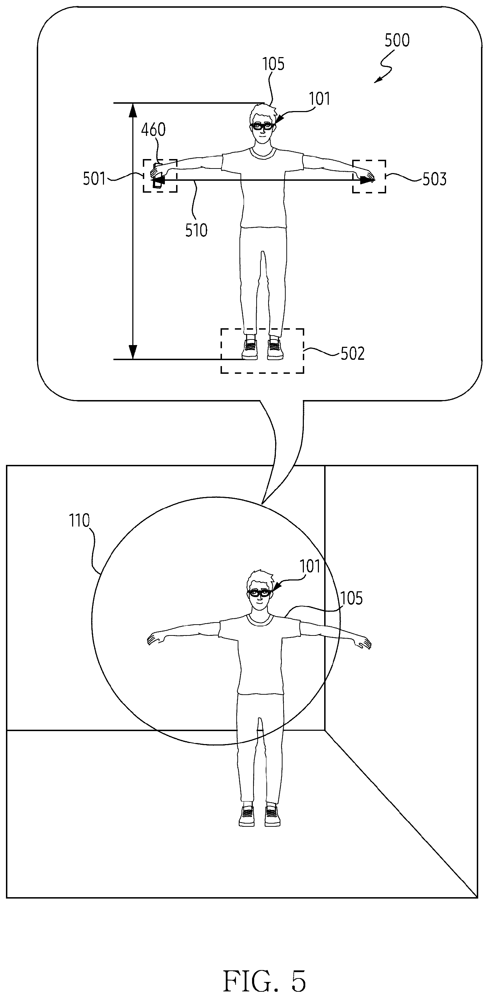

The wearable device 101 according to an embodiment may obtain body information 434 of the user based on a location of the external electronic device 460 in a state in which a communication link is established with the external electronic device 460 using the communication circuitry 470. The wearable device 101 may identify an interaction area (e.g., the interaction area 117 of FIG. 1) using the body information 434 of the user by controlling the camera 440. An operation in which the wearable device 101 obtains the body information 434 of the user will be described later in FIG. 5.

As described above, the wearable device 101 according to an embodiment may provide a software application suitable for the user (e.g., the user 105 of FIG. 1) by using the software application usage history information 431 mapped to the location information 433 of the wearable device 101. The wearable device 101 may enhance the user experience for the augmented reality by displaying the software application on the display using physical environmental characteristics (e.g., information on an external object (e.g., a location of the external object 114 of FIG. 1) and information (e.g., the body information 434 of the user, and/or the software application usage history information 431) on the user stored in the memory 430) of the space 100.

FIG. 5 illustrates an example of an operation in which a wearable device according to an embodiment obtains body information of a user. A wearable device 101 of FIG. 5 may be an example of the wearable device 101 of FIGS. 1 to 4. Referring to FIG. 5, an exemplary state 500 for obtaining body information of a user 105 wearing the wearable device 101 according to an embodiment is illustrated.

The wearable device 101 according to an embodiment may establish a communication link with an external electronic device 460 using communication circuitry. The wearable device 101 may identify a relative position of the external electronic device 460 from the wearable device 101 in a state in which the communication link is established. For example, the external electronic device 460 may be referred to as a controller for controlling at least one of operations of the wearable device 101. The external electronic device 460 may be one or more. The wearable device 101 may identify a first location of the external electronic device 460 in contact with the right hand 501 of the user 105. For example, in a state of identifying the first position, it may identify a second position of another external electronic device distinct from the external electronic device 460 in contact with the left hand 503 of the user 105. The wearable device 101 may obtain an arm length of the user 105 based on identifying the first location of the external electronic device 460 and the second location of the other external electronic device. The arm length may mean a length from a fingertip included in the left hand 503 to a fingertip included in the right hand 501. For example, the arm length may be identified by the wearable device 101 in a state in which the left arm including the left hand 503 and the right arm including the right hand 501 are in a straight line (e.g., a state parallel to a straight line 510).

The wearable device 101 according to an embodiment may identify a location of the external electronic device 460 adjacent to a foot 502 of the user 105. The wearable device 101 may obtain a size (or a height) according to a posture of the user 105 based on identifying the location. For example, the posture of the user may include a standing posture, a sitting posture, a prone posture, or a lying posture. The wearable device 101 may obtain the height of the user 105 based identifying the location. However, it is not limited thereto. Although not illustrated, the wearable device 101 may obtain a sitting height of the user 105 in case that the user 105 is sitting.

The wearable device 101 according to an embodiment may obtain information based on a characteristic of the user 105 in response to an input of the user 105. For example, the characteristic of the user 105 may include information indicating a right-hander or a left-hander. For example, the wearable device 101 may set a user area 110 adjacent to at least one of the right hand 501 or the left hand 503 using the information based on the characteristic of the user 105. The user area 110 may be set based on the arm length of the user 105. For example, in case that the user 105 is a right-handed person, the wearable device 101 may obtain the user area 110 based on a direction of the right hand 501, the arm length, and a designated parameter (e.g., 1.3 times). The user area 110 may have a polygonal shape and/or a closed curve shape. However, it is not limited thereto.

Although not illustrated, the wearable device 101 according to an embodiment may identify a body part of the user 105 using the camera 440 of FIG. 4. For example, the wearable device 101 may display, in order to identify the body part, on a display 450, a visual object for guiding designated motion (e.g., open-arm motion) of the user 105. For example, the wearable device 101 may obtain a location of the right hand 501, a location of the left hand 503, and/or a location of the foot 502 based on identifying the body part of the user 105 based on the designated motion. The wearable device 101 may obtain the arm length, the height, and/or the sitting height of the user 105 based on obtaining one or more locations.

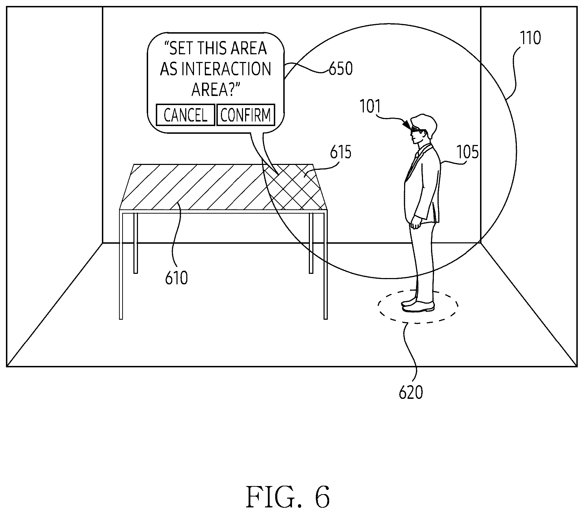

Hereinafter, in FIG. 6, an example of an operation in which the wearable device 101 sets an interaction area in which a surface of the external object included in the image obtained by using the camera and the user area 110 overlap will be described later.

As described above, using the body information (e.g., the body information 434 of the user of FIG. 4) of the user 105, the wearable device 101 according to an embodiment may set an area (e.g., the user area 110) (or, reach) in which the user is accessible, in a state in which a location of the user 105 wearing the wearable device 101 and/or the location of the wearable device 101 are fixed. The wearable device 101 may identify a portion of the surface of the external object as an interaction area for displaying a visual object corresponding to a software application by using the accessible area. The wearable device 101 may enhance user convenience by providing information on the software application frequently used by the user 105 in the location.

FIG. 6 illustrates an example of an operation in which a wearable device according to an embodiment sets an interaction area for displaying a visual object indicating a software application. A wearable device 101 of FIG. 6 may include the wearable device 101 of FIGS. 1 to 5.

The wearable device 101 according to an embodiment may identify a location 620 of the wearable device 101 located in at least a portion of a space (e.g., the space 100 of FIG. 1) using communication circuitry. The wearable device 101 may identify a software application usage history information (e.g., the software application usage history information 431 of FIG. 4) corresponding to location information (e.g., the location information 433 of FIG. 4) based on identifying the location 620. The location information may include information indicating the space and information on the location 620.

For example, the wearable device 101 may identify a surface 610 of an external object located in the space using a camera (e.g., the camera 440 of FIG. 4) based on identifying the location 620. An operation in which the wearable device 101 displays a visual object corresponding to the surface 610 based on identifying the surface 610 will be described later in FIG. 8.

For example, the surface 610 of the external object may be formed toward a reference direction. The reference direction may include a direction parallel to a horizontal surface and/or a direction parallel to a vertical surface. The wearable device 101 may identify the surface 610 based on a shape of the external object. The surface 610 may mean a plane for displaying at least one virtual object by the wearable device 101. For example, the wearable device 101 may identify a plane included in the external object as the surface 610 based on the shape of the external object.

For example, the wearable device 101 may obtain a user area 110 using body information (e.g., the body information of the user of FIG. 4) of the user based on identifying the surface 610. The wearable device 101 may identify that the user area 110 and a portion of the surface 610 of the external object overlap based on motion of the user 105 moving toward the external object. The wearable device 101 may set or select the portion of the surface 610 overlapping the user area 110 as an interaction area 615. The wearable device 101 may display a visual object 650 for setting or selecting the portion of the surface 610 as the interaction area 615 using a display. For example, the interaction area 615 may mean an area that the user 105 is accessible in a state in which the wearable device 101 is at least temporarily disposed in the location 620. The wearable device 101 may receive a user input for setting the portion of the surface 610 as the interaction area 615. For example, the wearable device 101 may set one or more interaction areas 615 based on identifying one or more external objects in the space using the camera.

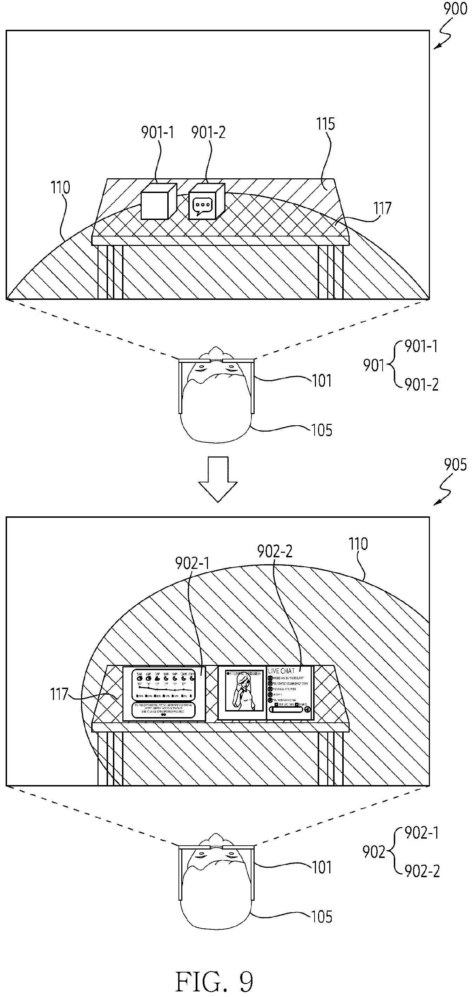

The wearable device 101 according to an embodiment may obtain the interaction area 615 in response to the user input for setting the portion of the surface 610 of the external object as the interaction area 615. The wearable device 101 may identify a size of the interaction area 615. Based on identifying the size of the interaction area 615, the wearable device 101 may identify the visual object corresponding to the software application to be displayed in the interaction area 615. An operation in which the wearable device 101 displays the visual object based on the size of the interaction area 615 will be described later in FIG. 9.

As described above, the wearable device 101 according to an embodiment may identify the portion of the surface 610 of the external object located in the space as the interaction area 615 by using the user area 110. The wearable device 101 may display the visual object indicating the software application on the interaction area 615 based on identifying the interaction area 615. The wearable device 101 may enhance user convenience by displaying the visual object based on the location of the user 105.

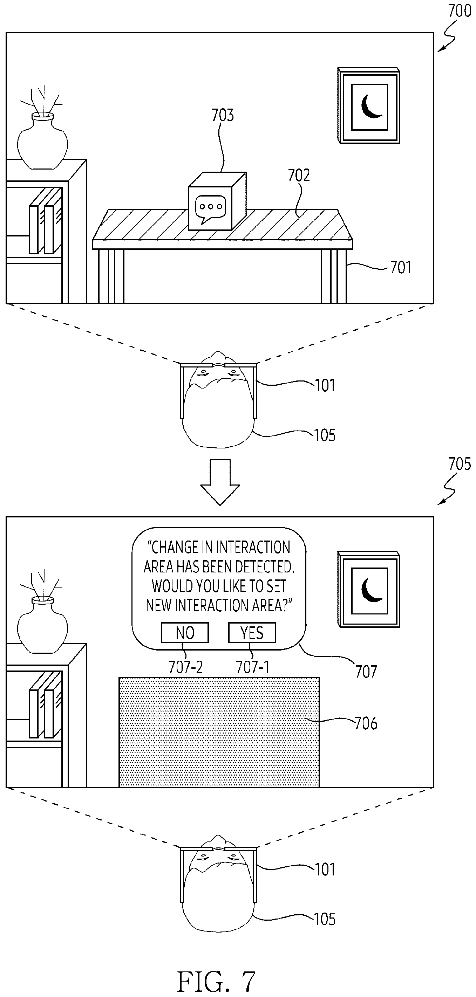

Hereinafter, an example of an operation in which the wearable device 101 changes the interaction area 615 in at least a portion of the space will be described later in FIG. 7.

FIG. 7 illustrates an example of an operation in which a wearable device according to an embodiment changes an interaction area. A wearable device 101 of FIG. 7 may include the wearable device 101 of FIGS. 1 to 6. Referring to FIG. 7, an exemplary state 700 in which the wearable device 101 according to an embodiment identifies a surface 702 of an external object 701 located in a space is illustrated.

Referring to FIG. 7, in the state 700, the wearable device 101 according to an embodiment may identify the surface 702 of the external object 701 using a camera. For example, the wearable device 101 may display the visual object 703 on a portion of the surface 702 by controlling a display. For example, the wearable device 101 may identify the external object 701 using the camera in a state of being located in at least a portion of the space. The visual object 703 may be an icon of a software application generated based on a software application usage history information (e.g., the software application usage history information 431 of FIG. 4) corresponding to the at least a portion of the space where the external object 701 is located.

For example, the portion of the surface 702 may be an example of an interaction area (e.g., the interaction area 117 of FIG. 1) in which the surface 702 and the user area 110 of FIG. 1 overlap. The wearable device 101 may display the visual object 703 on the portion of the surface 702 by setting the portion of the surface 702 as the interaction area. For example, the wearable device 101 may store information indicating the external object 701 and/or the interaction area in memory of the wearable device 101 based on setting the portion of the surface 702 of the external object 701 as the interaction area.

In a state 705, the wearable device 101 according to an embodiment may identify that a state of the at least a portion of the space where the external object 701 is located is changed by using the camera. The state of the at least a portion of the space where the external object 701 is located being changed may include a state in which a color of the surface 702 is changed, a position of the external object 701 is changed, or the wearable device 101 may not identify the external object 701.

For example, the wearable device 101 may change the set interaction area in case of not identifying the external object 701 in the at least a portion of the space using the camera. For example, the wearable device 101 may identify a surface 706 of another external object (e.g., a wall surface) distinct from the external object 701 that may be set as an interaction area based on an image obtained using the camera. For example, the wearable device 101 may identify a portion of the surface 706 of the other external object as the interaction area based on the body information 434 of the user of FIG. 4. The wearable device 101 may display a visual object 707 for setting the surface 706 as the interaction area by controlling the display in a state in which the wearable device 101 is located in the at least a portion of the space.

For example, the wearable device 101 may receive a user input for setting the interaction area in a state in which the wearable device 101 is located in the at least a portion of the space by using the visual object 707. The wearable device 101 may set the portion of the surface 706 as the interaction area based on receiving a user input indicating selection of an icon 707-1 of the visual object 707. For example, the wearable device 101 may set an area overlapping the user area 110 of FIG. 5 and the portion of the surface 706 as the interaction area. In the set interaction area, the wearable device 101 may display the visual object 703 using the display.

For example, the wearable device 101 may maintain the interaction area set in state 700 based on receiving a user input indicating selection of an icon 707-2 of the visual object 707.

As described above, the wearable device 101 according to an embodiment may change the interaction area for displaying the visual object for the software application, corresponding to the at least a portion of the space. For example, the wearable device 101 may set another interaction area using another external object distinct from the external object located in the at least a portion of the space in case that the external object used to set as the interaction area is not identified using the camera. As a state of the space changes, the wearable device 101 may change the interaction area for displaying the visual object. The wearable device 101 may provide a user 105 with an augmented reality service applicable to various environments based on changing the interaction area.

FIG. 8 illustrates an example of an operation in which a wearable device according to an embodiment displays a visual object on an interaction area. A wearable device 101 of FIG. 8 may include the wearable device 101 of FIGS. 1 to 7. Referring to FIG. 8, an exemplary state 800 in which the wearable device 101 according to an embodiment has entered a space 100 is illustrated.

The wearable device 101 according to an embodiment may identify that the wearable device 101 and/or a user 105 wearing the wearable device 101 enters the space 100 by using communication circuitry in the state 800. For example, the wearable device 101 may identify the space 100 where the wearable device is located based on a location of the wearable device identified through the communication circuitry. The wearable device 101 may identify the software application usage history information 431 of FIG. 4 based on the location information 433 of FIG. 4 based on identifying the space 100. Based on identifying the software application usage history information 431, the wearable device 101 may identify an area to display a software application indicated by the software application usage history information 431.

For example, the wearable device 101 may identify an external object 114 located in the space 100 based on an image obtained through a camera. The wearable device 101 may identify a surface 115 corresponding to the area to display the software application based on identifying the external object 114. The wearable device 101 may guide the user 105 that at least one software application may be displayed on the surface 115 based on identifying the surface 115. For example, the wearable device 101 may display a visual object for guiding, based on a size, on the surface 115 based on identifying the surface 115 by controlling a display. As an example, a portion of the surface 115 may be an area set by the wearable device 101 as an interaction area to display a visual object corresponding to the software application in the space 100.

Referring to FIG. 8, in a state 805, the wearable device 101 according to an embodiment may identify a location of the wearable device 101 adjacent to the external object 114 using the communication circuitry. The wearable device 101 may identify an interaction area 117 overlapping the surface 115 of the external object 114 by using the user area 110 of FIG. 1. The wearable device 101 may display a visual object 120 based on identifying the interaction area 117 using the display. The visual object 120 may be an example of a visual object indicating a selected software application (e.g., the one or more software applications 435 of FIG. 4) based on a software application usage history information (e.g., the software application usage history information 431 of FIG. 4) corresponding to the location of the wearable device 101. The wearable device 101 may adjust the number and/or a shape of the visual object 120 based on a size of the interaction area 117. An operation in which the wearable device 101 adjusts the number and/or the shape of the visual object 120 will be described later in FIG. 9.

The wearable device 101 according to an embodiment may select a software application corresponding to the visual object to be displayed in the interaction area 117 based on the software application usage history information corresponding to the location of the wearable device 101 obtained through the communication circuitry. For example, the wearable device 101 may distinguish one or more software applications based on a category of the one or more software applications (e.g., the one or more software applications of FIG. 4) selected based on the usage history information. The wearable device 101 may display a visual object indicating a portion of the one or more software applications distinguished based on the same category on the interaction area 117. The wearable device 101 may render the visual object based on grouping the portion of the one or more software applications. As an example, the visual object may include an icon indicating the portion of the one or more software applications grouped based on a folder type.

For example, the category may be classified based on a service provided based on the software application. The service may include a service to provide time, a service to provide information related to banking, a service to provide weather information, a service to provide music, a service to provide information related to medical care, a service to provide information related to an automobile, and/or a service to provide information related to infant care.

The wearable device 101 according to an embodiment may use the usage history information (e.g., the software application usage history information 431 of FIG. 4) to group the one or more software applications. For example, the wearable device 101 may group the one or more software applications based on a frequency of use of each of the one or more software applications.

For example, wearable device 101 may distinguish the one or more software applications by using color information of the visual object (e.g., the visual object 120) corresponding to each of the one or more software applications. For example, the wearable device 101 may group a portion of one or more software applications using the category, the frequency of use, and/or the color information. The wearable device 101 may display the visual object (e.g., the visual object 120) indicating the portion of the grouped one or more software applications on the interaction area 117 using the display.

As described above, the wearable device 101 according to an embodiment may classify the plurality of software applications stored in memory based on the category, the frequency of use, and/or the color information. The wearable device 101 may display one visual object indicating a portion of the distinguished software applications on the interaction area 117. The wearable device 101 may provide information on the one or more software applications using one visual object by displaying the one visual object in the interaction area 117. The wearable device 101 may reduce data for rendering a visual object corresponding to each of the one or more software applications by providing the information on the one or more software applications using the one visual object.

FIG. 9 illustrates an example of an operation in which a wearable device according to an embodiment changes a visual object based on a size of an interaction area. A wearable device 101 of FIG. 9 may include the wearable device 101 of FIGS. 1 to 8. Referring to FIG. 9, exemplary states 900 and 905 for the wearable device 101 according to an embodiment to adjust the number and/or a shape of visual objects 901 based on a size of an interaction area 117 are illustrated.

Referring to FIG. 9, in the state 900, the wearable device 101 according to an embodiment may display the visual objects 901 on the interaction area 117 by controlling a display. The visual objects 901 may be referred to as the visual object 120 of FIG. 1. For example, the wearable device 101 may display the visual objects 901 based on the size of the interaction area 117 where a surface 115 of an external object and a user area 110 overlap. The wearable device 101 may adjust the number of the visual objects 901 to be displayed on the interaction area 117 based on the size of the interaction area 117.

For example, the wearable device 101 may display the visual objects 901 based on a priority included in the software application usage history information 431 of FIG. 4. The wearable device 101 may identify that a size of the overlapping area is changed based on that the wearable device 101 is moved. In an embodiment, movement of the wearable device 101 may be identified based on a sensor (e.g., an inertial measurement sensor) of the wearable device 101 and/or a camera. The wearable device 101 may reset the interaction area 117 based on that the size of the overlapping area is changed. The wearable device 101 may change the shape and/or the number of the visual object indicating the software application displayed on the interaction area 117 based on that the interaction area 117 is reset. As an example, the wearable device 101 may display a visual object 901-1 on the interaction area 117 by controlling the display, based on identifying the size of the interaction area 117 less than a designated threshold. The wearable device 101 may display visual objects 901-1 and 901-2 on the interaction area 117 based on identifying the size of the interaction area 117 greater than or equal to the designated threshold. Software applications corresponding to each of the visual objects 901-1 and 901-2 (e.g., the software applications 435-1 and 435-2 of FIG. 4) may be different. As an example, the visual objects 901-1 and 901-2 may correspond to a plurality of distinguished software applications based on different categories. However, it is not limited thereto. For example, the wearable device 101 may adjust the number of the visual objects 901 based on the size of the surface 115.

Referring to FIG. 9, in the state 905, the wearable device 101 according to an embodiment may change the shape of the visual objects 901 based on the size of the interaction area 117. For example, the size of the interaction area 117 identified in state 905 may be wider than the size of the interaction area 117 identified in state 900. For example, the wearable device 101 may reset the interaction area 117 in the state 905. The wearable device 101 may set the size of the interaction area 117 based on a location of the wearable device 101. However, it is not limited thereto.

The wearable device 101 according to an embodiment may display visual objects 902 corresponding to the visual objects 901 by controlling a display, based on identifying the interaction area 117. For example, the visual object 902-1 may correspond to the visual object 901-1. The visual object 902-2 may correspond to the visual object 901-2. The visual objects 902 may be an example of a widget based on each of software applications, corresponding to each of the visual objects 902. The visual objects 902 may be an example of a picture-in-picture (PIP) based on each of the software applications. For example, in response to an input indicating selection of one of the executable visual objects 902, the wearable device 101 may initiate execution of a software application corresponding to the one. The wearable device 101 may display at least one screen by controlling the display based on the execution of the software application. The wearable device 101 may display the at least one screen on the interaction area 117. The at least one screen may be included in the visual objects 902.

In response to an input indicating selection of at least one of the visual objects 901 and 902, the wearable device 101 according to an embodiment may initiate execution of a software application corresponding to the at least one. For example, the wearable device 101 may display a screen based on the execution of the software application by overlapping an image obtained through the camera. The wearable device 101 may overlap and display the image and the screen based on adjusting an alpha value (e.g., a parameter for controlling transparency) (or transparency) corresponding to the image and the screen. For example, the alpha value may indicate a state in which the smallest value indicates a completely transparent state, and the largest value may indicate a completely opaque state, within a range. The image may include at least a portion of a real space (e.g., the space 100 of FIG. 1) where the wearable device 101 is located, and/or an external object (e.g., the external object 114 of FIG. 1). For example, in a state of displaying the image obtained through the camera (e.g., the state 900 or the state 905), the wearable device 101 may adjust the image, the visual objects 901 and 902, and/or the alpha value (e.g., the parameter for controlling the transparency) of the screen, based on whether to display the visual objects 901 and 902 and/or whether to display the screen based on the execution of the software application. For example, the wearable device 101 may adjust the alpha value (e.g., the parameter for controlling the transparency) based on s priority between the image, the visual objects 901 and 902, or the screen. Herein, the priority may be lowered in an order of the screen, the visual objects 901 and 902, and the image. As the priority is higher, the alpha value may be higher. For example, the wearable device 101 may set the transparency of the image at high first transparency while the visual objects 901 and 902 and the screen are not displayed. For example, the wearable device 101 may set the alpha value of the image at third transparency lower than the first transparency and the third transparency while displaying the visual objects 901 and 902 at second transparency.

For example, the wearable device 101 may receive an input indicating selection of at least one of the visual objects 901 and 902 in a state (e.g., the state 900 or the state 905) of displaying the image obtained through the camera. For example, a first alpha value for displaying the visual objects 901 and 902 may be a value relatively larger than a second alpha value for displaying the image. In response to the input, the wearable device 101 may initiate execution of a software application (e.g., the first software application 435-1 of FIG. 4) corresponding to the at least one. Based on the execution of the software application, the wearable device 101 may display at least one screen overlapping the image and/or the visual objects using the display. A third alpha value for displaying the at least one screen may be a value relatively larger than the first alpha value. The wearable device 101 may overlap and display the visual objects 901 and 902, the image, and/or the at least one screen, on the display. Based on the first alpha value, the second alpha value, and/or the third alpha value, the wearable device 101 may substantially simultaneously provide a user 105 with the visual objects 901, 902, the image, and/or the at least one screen. For example, while displaying at least one screen, the wearable device 101 may provide information on the real space (e.g., the space 100 of FIG. 1) where the user 105 is located using the image obtained through the camera.

As described above, the wearable device 101 according to an embodiment may change the number and/or the shape of the visual objects 901 and 902 based on the size of the interaction area 117. The wearable device 101 may provide an augmented reality service that performs an interaction with the user 105 based on changing the number and/or the shape of the visual objects 901 and 902.

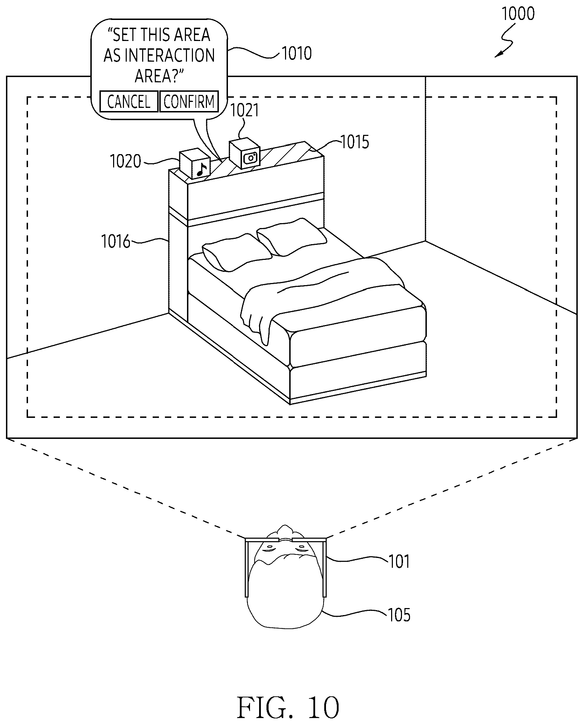

Hereinafter, in FIG. 10, an example of an operation in which the wearable device 101 sets an area for displaying the visual object based on an input of the user 105 will be described later.

FIG. 10 illustrates an example of an operation in which a wearable device according to an embodiment sets an interaction area in response to a user input. A wearable device 101 of FIG. 10 may be an example of the wearable device 101 of FIGS. 1 to 9. Referring to FIG. 10, an exemplary state 1000 in which the wearable device 101 according to an embodiment identifies a surface 1015 of an external object in a space is illustrated.

In the state 1000, the wearable device 101 according to an embodiment may identify an external object 1016 by using an image obtained through a camera. The wearable device 101 may identify at least a portion of the space where the wearable device 101 is located based on a location of the wearable device 101 obtained through communication circuitry. The wearable device 101 may identify the external object 1016 located in the at least a portion of the space using the image. Based on identifying the at least a portion of the space, the wearable device 101 may identify a software application usage history information (e.g., the software application usage history information 431 of FIG. 4) corresponding to the at least a portion of the space. The wearable device 101 may set an area for displaying at least one visual object based on the usage history information.

For example, the wearable device 101 may set an interaction area based on a user input independently of setting the interaction area using a user area 110 formed based on the body information 434 of the user of FIG. 4. For example, the wearable device 101 may identify the surface 1015 of the external object 1016. Based on identifying the surface 1015, the wearable device 101 may display a visual object 1010 for setting the surface 1015 as the interaction area for displaying the at least one visual object, by controlling a display.

The wearable device 101 according to an embodiment may receive a user input for setting the surface 1015 as the interaction area (e.g., the interaction area 117 of FIG. 1) by using the visual object 1010. In response to the user input, the wearable device 101 may display visual objects 1020 and 1021 on at least a portion of the surface 1015 using the display. For example, the visual objects 1020 and 1021 may be referred to as the visual object 120 of FIG. 1. The visual objects 1020 and 1021 may correspond to selected software applications (e.g., the one or more software applications 435 of FIG. 4) using the location information 433 of FIG. 4 and/or the software application usage history information 431 of FIG. 4. Based on setting the portion of the surface 1015 as the interaction area, the wearable device 101 may identify the at least a portion of the space where the external object 1016 is located based on the location of the wearable device 101 obtained through the communication circuitry. As an example, a state of identifying the at least a portion of the space where the external object 1016 is located may include a state in which the wearable device 101 enters the at least a portion of the space. Based on identifying the at least a portion of the space, the wearable device 101 may display the visual objects 1020 and 1021, on the portion of the surface 1014, by controlling the display.

As described above, the wearable device 101 according to an embodiment may set the portion of the surface 1015 as the interaction area based on receiving the user input. The wearable device 101 may set the portion of the surface 1015 as the interaction area, thereby displaying the visual objects 1020 and 1021. Based on displaying the visual objects 1020 and 1021, the wearable device 101 may provide a user 105 with virtual objects indicating accessories to decorate an interior of the at least a portion of the space where the external object 1016 is located. The wearable device 101 may provide the user 105 with augmented reality that may be represented to be suitable for the user 105 by displaying the virtual objects.

FIG. 11 illustrates an example of a flowchart indicating an operation of a wearable device according to an embodiment. At least a portion of operations of FIG. 11 may be performed by the wearable device 101 of FIG. 4 and/or the processor 420 of FIG. 4. Each of the operations of FIG. 11 may be performed sequentially, but is not necessarily performed sequentially. For example, an order of each of the operations may be changed, and at least two operations may be performed in parallel.

Referring to FIG. 11, in operation 1110, the wearable device according to an embodiment may identify an external object located in a space based on an image obtained by using a camera. For example, the wearable device may identify at least a portion of the space based on a location of the wearable device obtained by using communication circuitry. The wearable device may identify the external object using the camera based on identifying the at least a portion of the space. The external object may include a surface for displaying at least one visual object.

Referring to FIG. 11, in operation 1120, the wearable device according to an embodiment may obtain a portion of the surface of the external object as an interaction area by using a user area formed based on body information of a user wearing the wearable device. For example, in a state in which a communication link with an external electronic device (e.g., the external electronic device 460 of FIG. 4) is established using communication circuitry, the wearable device may identify a body size of the user 105 of FIG. 5 based on a location of the external electronic device. The wearable device may obtain the user area (e.g., the user area 110 of FIG. 1) based on identifying the body size. The wearable device may identify the portion of the surface of the external object overlapping the user area based on identifying the location of the wearable device adjacent to the external object. The wearable device may identify the portion of the surface as the interaction area (e.g., the interaction area 117 of FIG. 1) for displaying the at least one visual object.

Referring to FIG. 11, in operation 1130, the wearable device according to an embodiment may display a visual object indicating a software application identified based on usage history information of the software application on the interaction area through a display. The wearable device may identify the usage history information 431 of the software application of FIG. 4 corresponding to the location information 433 of FIG. 4 based on the location of the wearable device obtained through the communication circuitry. The wearable device may select at least one of the one or more software applications 435 of FIG. 4 based on the usage history information. The wearable device may display a visual object corresponding to the selected at least one on the interaction area.

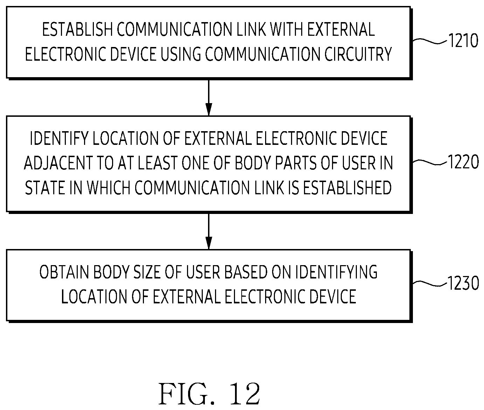

FIG. 12 illustrates an example of a flowchart indicating an operation in which a wearable device according to an embodiment obtains body information of a user using an external electronic device. At least a portion of operations of FIG. 12 may be performed by the wearable device 101 of FIG. 4 and/or the processor 420 of FIG. 4. Each of the operations of FIG. 12 may be performed sequentially, but is not necessarily performed sequentially. For example, an order of each of the operations may be changed, and at least two operations may be performed in parallel. At least one of the operations of FIG. 12 may be related to at least one of the operations of FIG. 11.

Referring to FIG. 12, in operation 1210, the wearable device according to an embodiment may establish a communication link with an external electronic device using communication circuitry. A state in which the wearable device establishes the communication link may be referred to as the state 500 of FIG. 5.

Referring to FIG. 12, in operation 1220, the wearable device according to an embodiment may identify a location of the external electronic device adjacent to at least one of body parts of the user in a state in which the communication link is established. The wearable device may identify the location of the external electronic device (e.g., the external electronic device 460 of FIG. 4) adjacent to each of the body parts (e.g., the right hand 501, the left hand 503, and the foot 502) of the user 105 of FIG. 5. The wearable device may obtain an arm length, a height, and/or a sitting height of the user based on identifying the location of the external electronic device.

Referring to FIG. 12, in operation 1230, the wearable device according to an embodiment may obtain a body size of the user based on identifying the location of the external electronic device. The wearable device may store body information (e.g., the body information 434 of the user of FIG. 4) of the user in memory of the wearable device based on identifying the body size of the user. The wearable device may set the user area 110 of FIG. 1 by using the body information of the user.

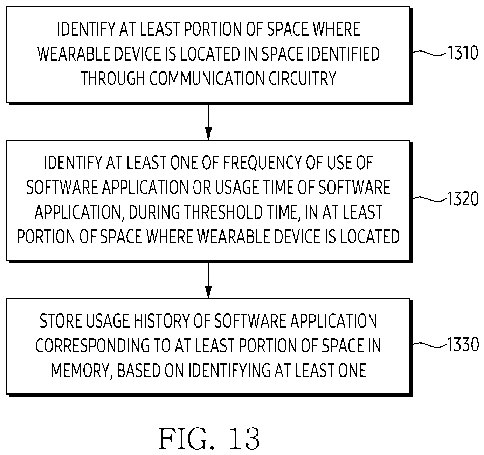

FIG. 13 illustrates an example of a flowchart indicating an operation a wearable device according to an embodiment obtains (or generates) usage history information of a software application. At least a portion of operations of FIG. 13 may be performed by the wearable device 101 of FIG. 4 and/or the processor 420 of FIG. 4. Each of the operations of FIG. 13 may be performed sequentially, but is not necessarily performed sequentially. For example, an order of each of the operations may be changed, and at least two operations may be performed in parallel. At least one of the operations of FIG. 13 may be related to at least one of the operations of FIG. 11.

Referring to FIG. 13, in operation 1310, the wearable device according to an embodiment may identify at least a portion of a space where the wearable device is located in the space identified through communication circuitry.

Referring to FIG. 13, in operation 1320, the wearable device according to an embodiment may identify at least one of a frequency of use of a software application or a usage time of the software application during a threshold time in the at least a portion of the space where the wearable device is located. The wearable device may obtain the number of times that each of one or more software applications (e.g., the one or more software applications 435 of FIG. 4) stored in memory are executed, and time information that each of the one or more software applications are executed, during the threshold time. For example, in response to a notification generated from each of the one or more software applications, the wearable device may identify a reaction velocity (e.g., the reaction velocity of FIG. 4) of a user who executed a software application related to the notification. The wearable device may set a priority for each of the one or more software applications based on the number of times, the time information, and/or the reaction velocity. The wearable device may obtain (or generate) the software application usage history information 431 of FIG. 4 based on the set priority.

Referring to FIG. 13, in operation 1330, the wearable device according to an embodiment may store the usage history information of the software application corresponding to the at least a portion of the space in the memory, based on identifying at least one. The wearable device may store the usage history information (e.g., the software application usage history information 431 of FIG. 4) mapped to location information (e.g., the location information 433 of FIG. 4) on the at least a portion of the space, in the memory. The wearable device may identify the usage history information based on a location of the wearable device obtained by using the communication circuitry, in a state of entering the at least a portion of the space. The wearable device may display a visual object indicating the software application corresponding to the usage history information, based on the identifying the usage history information. For example, the wearable device may display the visual object on a surface of an external object located in the at least a portion of the space.

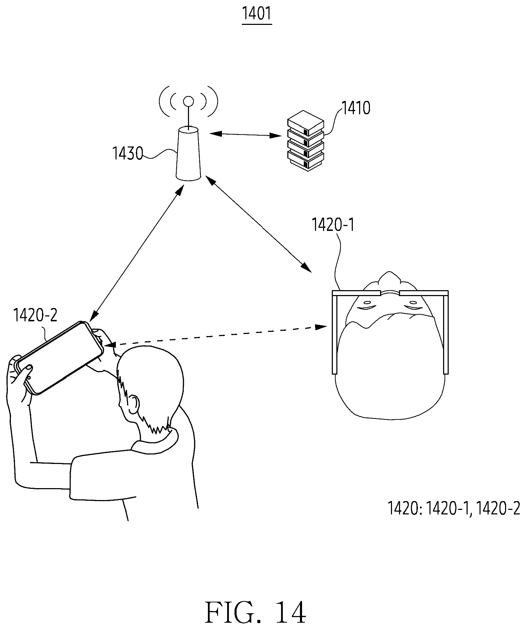

FIG. 14 is an exemplary diagram of a network environment 1401 in which a metaverse service is provided through a server 1410.

Metaverse is a compound word of the English words "Meta" meaning "virtual" and "transcendence" and "Universe" meaning cosmos, and refers to a three-dimensional virtual world in which social, economic, and cultural activities take place like a real world. Metaverse is a concept that has evolved one step further than a virtual reality (VR, cutting-edge technology that enables people to experience real-life experiences in a virtual world created by a computer), and it is characterized by using avatars to not only enjoy games or virtual reality, but also social and cultural activities like a reality. A metaverse service may provide media content for enhancing immersion in the virtual world, based on an augmented reality (AR), a virtual reality environment (VR), a mixed environment (MR), and/or an extended reality (XR).

For example, media content provided by the metaverse service may include social interaction content including avatar-based game, concert, party, and/or meeting. For example, the media content may include information for economic activities such as advertising, user created content, and/or sales and/or shopping of productions. Ownership of the user created content may be proved by a blockchain-based non-fungible token (NFT). The metaverse service may support economic activities based on real money and/or cryptocurrency. By the metaverse service, virtual content associated with the real world, such as digital twin or life logging, may be provided.

Referring to FIG. 14, a network environment 1401 may include a server 1410, a user terminal 1420 (e.g., a first terminal 1420-1 and a second terminal 1420-2), and a network connecting the server 1410 and the user terminal 1420. In the network environment 1401, the server 1410 may provide a metaverse service to the user terminal 1420. The network may be formed by at least one intermediate node 1430 including an access point (AP) and/or a base station. The user terminal 1420 may access the server 1410 through the network and output a user interface (UI) associated with a metaverse service to a user of the user terminal 1420. Based on the UI, the user terminal 1420 may obtain information to be inputted into the metaverse service from the user, or output information (e.g., multimedia content) associated with the metaverse service to the user.

In this case, the server 1410 provides a virtual space so that the user terminal 1420 may perform activities in the virtual space. In addition, the user terminal 1420 may represent information provided by the server 1410 to the user by installing an S/W agent to access the virtual space provided by the server 1410, or transmit information that the user wants to represent in the virtual space to the server. The S/W agent may be provided directly through the server 1410, downloaded from a public server, or embedded and provided when purchasing a terminal.

In an embodiment, the metaverse service may provide a service to the user terminal 1420 and/or a user by using the server 1410. The embodiment is not limited thereto, and the metaverse service may be provided through individual contacts between users. For example, in the network environment 1401, the metaverse service may be provided by a direct connection between the first terminal 1420-1 and the second terminal 1420-2, independently of the server 1410. Referring to FIG. 14, in the network environment 1401, the first terminal 1420-1 and the second terminal 1420-2 may be connected to each other through a network formed by at least one intermediate node 1430. In an embodiment in which the first terminal 1420-1 and the second terminal 1420-2 are directly connected, any one of the first terminal 1420-1 and the second terminal 1420-2 may perform a role of the server 1410. For example, a metaverse environment may be configured only with a device-to-device connection (e.g., a peer-to-peer (P2P) connection).

In an embodiment, the user terminal 1420 (or the user terminal 1420 including the first terminal 1420-1 and the second terminal 1420-2) may be made in various form factors, and it is characterized by including an output device for providing an image and/or sound to the user and an input device for inputting information into the metaverse service. An exemplary user terminal 1420 in various form factors may include a smartphone (e.g., the second terminal 1420-2), an AR device (e.g., the first terminal 1420-1), a VR device, an MR device, a Video See Through (VST) device, an Optical See Through (OST) device, a smart lens, a smart mirror, a TV capable of inputting and outputting, or a projector.

A network (e.g., a network formed by at least one intermediate node 1430) in the present invention includes all of various broadband networks including 3G, 4G, and 5G and short-range networks (e.g., a wired network or a wireless network that directly connects the first terminal 1420-1 and the second terminal 1420-2) including Wi-Fi, BT, and the like.

A wearable device according to an embodiment may display a visual object indicating a software application corresponding to a space where the wearable device is located using a display. The wearable device may identify an interaction area to display the visual object. In the wearable device, a method for identifying the interaction area using body information of a user may be required.

As described above, in a wearable device 101 according to an embodiment, the wearable device may comprise a display 450, a camera 440, and a processor 420. The processor may be configured to identify, based on an image obtained by using the camera, an external object 114, 701, or 1016 located in a space 100. The processor may be configured to, using a user area 110 formed based on body information 434 of a user 105 wearing the wearable device, obtain a portion of a surface 115, 610, 702, or 706 of the identified external object as an interaction area 117 or 615. The processor may be configured to display, on the interaction area through the display, a visual object 120, 703, 901, 902, 1020, or 1021 indicating the software application 435 identified based on usage history information 431 of the software application.

As described above, in a wearable device 101 according to an embodiment, the wearable device may comprise a display 450, a camera 440, memory 430 storing instructions, and a processor 420. The instructions, when executed by the processor, may cause the wearable device to determine a user area based on body information 434 of a user 105 wearing the wearable device. The instructions, when executed by the processor, may cause the wearable device to identify an external object 114, 701, or 1016, based on an image obtained using the camera. The instructions, when executed by the processor, may cause the wearable device to output a user interface (UI) 650 querying whether to designate at least a portion of an area where the determined user area and a surface 115, 610, 702, or 706 of the identified external object overlap as an interaction area 117, or 615. The instructions, when executed by the processor, may cause the wearable device to, based on a user input to the UI identifying designation of the interaction area, display, on the interaction area through the display, a visual object 120, 703, 901, 902, 1020, or 1021 indicating a software application 435 identified based on usage history information 431 of the software application.

The instructions, when executed by the processor, may cause the wearable device to identify a location of the wearable device in a space identified through communication circuitry. The instructions, when executed by the processor, may cause the wearable device to generate the usage history information regarding the software application that the wearable device executed in the location.

The instructions, when executed by the processor, may cause the wearable device to identify that a size of the overlapping area is changed. The instructions, when executed by the processor, may cause the wearable device to reset the interaction area, based on that the size of the overlapping area is changed. The instructions, when executed by the processor, may cause the wearable device to change the number of the visual object displayed on the interaction area, based on the interaction area being reset.

The instructions, when executed by the processor, may cause the wearable device to display, on the interaction area, using the display, a second visual object including icons indicating a plurality of software applications including the software application being sorted based on a category of the software application.

The instructions, when executed by the processor, may cause the wearable device to establish a communication link with an external electronic device 460, using the communication circuitry. The instructions, when executed by the processor, may cause the wearable device to in a state of the communication link being established, based on identifying the external electronic device adjacent to at least one of body parts 501, 502, and 503 of the user, obtain the body information including an arm length of the user and a size according to a posture of the user to determine the user area where the user is capable of reaching.

The instructions, when executed by the processor, may cause the wearable device to display the image obtained using the camera at a first alpha value without displaying the visual object. The instructions, when executed by the processor, may cause the wearable device to, while displaying the visual object at a second alpha value on the image, display the image at a third alpha value below the first alpha value and the second alpha value.

For example, the wearable device may comprise communication circuitry 470. The processor may be configured to identify at least a portion of the space where the wearable device is located in the space identified through the communication circuitry. The processor may be configured to obtain (or generate) the usage history information of the software application for the at least a portion of the space.

For example, the processor may be configured to, in a state where the wearable device is located in the at least a portion of the space, during a threshold time, obtain (or generate) the usage history information of the software application, based on at least one of a usage frequency of the software application, or a usage time of the software application.

For example, the processor may be configured to change the visual object indicating the software application, based on a size of the interaction area.

For example, the processor may be configured to display, on the interaction area, using the display, the second visual object, distinct from a first visual object that is the visual object, indicating the plurality of software applications including the software application being sorted based on the category of the software application.

For example, the processor may be configured to establish a communication link with the external electronic device 460, using the communication circuitry. The processor may be configured to, in a state of the communication link being established, based on identifying the external electronic device adjacent to at least one of the body parts 501, 502, and 503 of the user, obtain the body information of the user.

For example, the processor may be configured to identify another external object distinct from the external object located in the space, based on the image obtained using the camera. The processor may be configured to, based on the body information of the user, identify a portion of a surface 706 of the another external object as another interaction area distinct from the interaction area.

For example, the processor may be configured to, based on identifying the space, display a third visual object corresponding to the surface of the external object, on the surface of the external object, through the display.

As described above, in a method of a wearable device 101 according to an embodiment, the method may comprise identifying, based on an image obtained by using a camera 440, an external object 114, 701, or 1016 located in a space 100. The method may comprise, using a user area 110 formed based on body information 434 of a user 105 wearing the wearable device, obtaining a portion of a surface 115, 610, 702, or 706 of the identified external object as an interaction area 117 or 615. The method may comprise displaying, on the interaction area through the display 450, a visual object 120, 703, 901, 902, 1020, or 1021 indicating the software application 435 identified based on usage history information 431 of the software application.

As described above, a method executed by a wearable device 101 according to an embodiment, the method may comprise determining a user area 110 based on body information 434 of a user 105 wearing the wearable device. The method may comprise identifying an external object 114, 701, or 1016, based on an image obtained using a camera 440. The method may comprise obtaining at least a portion of an area where the determined user area and a surface 115, 610, 702, or 706 of the identified external object overlap as an interaction area 117 or 615. The method may comprise, based on a user input to the UI identifying designation of the interaction area, displaying, on the interaction area through a display 450, a visual object 120, 703, 901, 902, 1020, or 1021 indicating a software application 435 identified based on usage history information 431 of the software application.

The method may comprise identifying a location of the wearable device in a space identified through communication circuitry 470. The method may comprise generating (or obtaining) the usage history information regarding the software application that the wearable device executed in the location.

The method may comprise identifying that a size of the overlapping area is changed. The method may comprise resetting the interaction area, based on that the size of the overlapping area is changed. The method may comprise changing the number of the visual object displayed on the interaction area, based on the interaction area being reset.

The method may comprise establishing a communication link with an external electronic device 460, using the communication circuitry. The method may comprise, in a state of the communication link being established, based on identifying the external electronic device adjacent to at least one of body parts 501, 502, and 503 of the user, obtaining the body information including an arm length of the user and a size according to a posture of the user to determine the user area where the user is capable of reaching.

For example, the method may comprise identifying at least a portion of the space where the wearable device is located in the space identified through the communication circuitry 470. The method may comprise obtaining (or generating) the usage history information of the software application regarding the at least a portion of the space.

For example, the obtaining (or generating) the usage history information may comprise, in a state where the wearable device is located in the at least a portion of the space, during a threshold time, obtaining (or generating) the usage history information of the software application, based on at least one of a usage frequency of the software application, or a usage time of the software application.

For example, the displaying the visual object may comprise changing the visual object indicating the software application based on a size of the interaction area.

For example, the displaying the visual object may comprise displaying, on the interaction area, using the display, a second visual object, distinct from a first visual object that is the visual object, indicating a plurality of software applications including the software application being sorted based on a category of the software application.

For example, the obtaining a portion of the surface of the external object as the interaction area may comprise establishing the communication link with the external electronic device 460, using the communication circuitry. The obtaining a portion of the surface of the external object as the interaction area may comprise, in a state of the communication link being established, based on identifying the external electronic device adjacent to at least one of the body parts 501, 502, and 503 of the user, obtaining the body information of the user.

For example, the identifying the external object may comprise identifying another external object distinct from the external object located in the space, based on the image obtained using the camera. The identifying the external object may comprise, based on the body information of the user, identifying a portion of a surface of the another external object as another interaction area distinct from the interaction area.

For example, the identifying the at least a portion of the space may comprise displaying a third visual object corresponding to the surface of the external object, on the surface of the external object, through the display.

As described above, in a computer readable storage medium storing one or more programs according to an embodiment, the one or more programs, when executed by a processor 420 of a wearable device 101, may be configured to identify an external object located in a space 100 based on an image obtained using a camera 440. The one or more programs, when executed by the processor of the wearable device, may be configured to obtain a portion of a surface 115, 610, 702, or 706 of the identified external object as an interaction area 117 or 615 by using a user area 110 formed based on body information 434 of a user 105 wearing the wearable device. The one or more programs, when executed by the processor of the wearable device, may be configured to display a visual object 120, 703, 901, 902, 1020, or 1021 indicating a software application 435 identified based on usage history information 431 of the software application, on the interaction area through a display 450.

As described above, in a computer readable storage medium, storing one or more programs, the one or more programs, when executed by a processor 420 of a wearable device 101, may cause the wearable device to determine a user area 110 based on body information 434 of a user 105 wearing the wearable device. The one or more programs, when executed by the processor 420, may cause the wearable device to identify an external object 114, 701, or 1016, based on an image obtained using the camera. The one or more programs, when executed by the processor 420, may cause the wearable device to output a user interface (UI) 650 querying whether to designate at least a portion of an area where the determined user area and a surface 115, 610, 702, or 706 of the identified external object overlap as an interaction area 117 or 615. The one or more programs, when executed by the processor 420, may cause the wearable device to, based on a user input to the UI identifying the designation of the interaction area, display, on the interaction area through the display, a visual object 120, 703, 901, 902, 1020, or 1021 indicating a software application 435 identified based on usage history information 431 of the software application.

For example, the one or more programs, when executed by the processor of the wearable device, may be configured to identify at least a portion of the space where the wearable device is located in the space identified through communication circuitry 470. The one or more programs, when executed by the processor of the wearable device, may be configured to obtain (or generate) the usage history information of the software application regarding the at least a portion of the space.

For example, the one or more programs, when executed by the processor of the wearable device, may be configured to, in a state where the wearable device is located in the at least a portion of the space, during a threshold time, obtain (or generate) the usage history information of the software application, based on at least one of a usage frequency of the software application, or a usage time of the software application.

For example, the one or more programs, when executed by the processor of the wearable device, may be configured to change the visual object indicating the software application based on a size of the interaction area.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device comprising:
a display;
a camera;
memory storing instructions; and
a processor, wherein the instructions, when executed by the processor, cause the wearable device to:
determine a user area based on body information of a user wearing the wearable device;
identify an external object, based on an image obtained using the camera;
output a user interface (UI) querying whether to designate at least a portion of an area where the determined user area and a surface of the identified external object overlap as an interaction area; and
based on a user input to the UI identifying the designation of the interaction area, display, on the interaction area through the display, a visual object indicating a software application identified based on usage history information of the software application.

2. The wearable device of claim 1, comprising communication circuitry,
wherein the instructions, when executed by the processor, cause the wearable device to:
identify a location of the wearable device in a space identified through the communication circuitry; and
generate the usage history information regarding the software application that the wearable device executed in the location.

3. The wearable device of claim 2,
wherein the instructions, when executed by the processor cause the wearable device to:
in a state where the wearable device is located in at least a portion of the space, during a threshold time, generate the usage history information of the software application, based on at least one of a usage frequency of the software application, or a usage time of the software application.

4. The wearable device of claim 1,
wherein the instructions, when executed by the processor cause the wearable device to:
identify that a size of the overlapping area is changed;
reset the interaction area, based on that the size of the overlapping area is changed; and
change the number of the visual object displayed on the interaction area, based on the interaction area being reset.

5. The wearable device of claim 1,
wherein the instructions, when executed by the processor cause the wearable device to:
display, on the interaction area, using the display, a second visual object including icons indicating a plurality of software applications including the software application being sorted based on a category of the software application.

6. The wearable device of claim 2,
wherein the instructions, when executed by the processor cause the wearable device to:
establish a communication link with an external electronic device, using the communication circuitry; and
in a state of the communication link being established, based on identifying the external electronic device adjacent to at least one of body parts of the user, obtain the body information including an arm length of the user and a size according to a posture of the user to determine the user area where the user is capable of reaching.

7. The wearable device of claim 1,
wherein the instructions, when executed by the processor cause the wearable device to:
identify another external object distinct from the external object located in the space, based on the image obtained using the camera; and
based on the body information of the user, identify a portion of a surface of the another external object as another interaction area distinct from the interaction area.

8. The wearable device of claim 1,
wherein the instructions, when executed by the processor cause the wearable device to:
display the image obtained using the camera at first transparency without displaying the visual object; and
while displaying the visual object at second transparency on the image, display the image at third transparency below the first transparency and the second transparency.

9. A method executed by a wearable device comprising:
determining a user area based on body information of a user wearing the wearable device;
identifying an external object, based on an image obtained using a camera;
outputting a user interface (UI) querying whether to designate at least a portion of an area where the determined user area and a surface of the identified external object overlap as an interaction area; and
based on a user input to the UI, displaying, on the interaction area through a display, a visual object indicating a software application identified based on usage history information of the software application.

10. The method of claim 9, comprising:
identifying a location of the wearable device in a space identified through communication circuitry; and
generating the usage history information regarding the software application that the wearable device executed in the location.

11. The method of claim 10,
wherein the generating the usage history information comprises:
in a state where the wearable device is located in at least a portion of the space, during a threshold time, generating the usage history information of the software application, based on at least one of a usage frequency of the software application, or a usage time of the software application.

12. The method of claim 9,
wherein displaying the visual object comprises:
identifying that a size of the overlapping area is changed;
resetting the interaction area, based on that the size of the overlapping area is changed; and
changing the number of the visual object displayed on the interaction area, based on the interaction area being reset.

13. The method of claim 9,
wherein displaying the visual object comprises:
displaying, on the interaction area, using the display, a second visual object including icons indicating a plurality of software applications including the software application being sorted based on a category of the software application.

14. The method of claim 10,
wherein obtaining a portion of the surface of the external object as the interaction area comprises:
establishing a communication link with an external electronic device, using the communication circuitry; and
in a state of the communication link being established, based on identifying the external electronic device adjacent to at least one of body parts of the user, obtaining the body information including an arm length of the user and a size according to a posture of the user to determine the user area where the user is capable of reaching.

15. A non-transitory computer readable storage medium, storing a program including instructions,
wherein the instructions are configured, when executed by a processor of a wearable device including a display, and a camera, to cause the wearable device to:
determine a user area based on body information of a user wearing the wearable device;
identify an external object, based on an image obtained using the camera;
output a user interface (UI) querying whether to designate at least a portion of an area where the determined user area and a surface of the identified external object overlap as an interaction area; and
based on a user input to the UI, display, on the interaction area through the display, a visual object indicating a software application identified based on usage history information of the software application.
